## Europäisches Patentamt

## European Patent Office

## Office européen des brevets

(11) Veröffentlichungsnummer: **0 394 447**

**A1**

# EUROPÄISCHE PATENTANMELDUNG
## veröffentlicht nach Art. 158 Abs. 3 EPÜ

(21) Anmeldenummer: **89901920.2**

(22) Anmeldetag: **28.10.88**

(86) Internationale Anmeldenummer:
**PCT/SU88/00217**

(87) Internationale Veröffentlichungsnummer:
**WO 90/04880 (03.05.90 90/10)**

(51) Int. Cl.5: **H02K 44/04, B22D 39/00**

(43) Veröffentlichungstag der Anmeldung:
**31.10.90 Patentblatt 90/44**

(84) Benannte Vertragsstaaten:
**AT BE CH DE FR GB IT LI LU NL SE**

(71) Anmelder: **VSESOJUZNY NAUCHNO-ISSLEDOVATELSKY PROEKTNO-KONSTRUKTORSKY I TEKHNOLOGICHESKY INST. ELEKTROSVAROCHNOGO OBORUDOVANIA (VNIIESO)**
**ul. Litovskaja, 10**
**Leningrad, 194100(SU)**

(72) Erfinder: **VNIIESO**
**ul. Litovskaya, 10**
**Leningrad, 194100(SU)**
Erfinder: **BYKHOVSKY, David Grigorievich**
**ul. Esenina, 32-2-95**
**Leningrad, 194358(SU)**
Erfinder: **PANOV, Alexandr Nikolaevich**
**naberezhnaya Fontanki, 26-3**
**Leningrad, 191028(SU)**

(74) Vertreter: **Finck, Dieter**
**Patentanwälte v. Füner, Ebbinghaus, Finck**
**Mariahilfplatz 2 & 3**
**D-8000 München 90(DE)**

(54) **ANORDNUNG ZUM DOSIERTEN ZUFÜHREN UND ERHITZEN VON GESCHMOLZENEN METALLEN.**

(57) Die Vorrichtung zur dosierten Zuführung und zur Erwärmung des flüssigen Metalls enthält eine zentrifugale MHD-Kondukionspumpe (1), in deren Metallgehäuse koaxial zu diesem eine zylinderförmige Arbeitskammer (4), welche mit einem Behälter (2) mit flüssigem Metall verbunden ist und unter Einwirkung eines vom Magnetsystem zu erzeugenden Magnetfeldes steht. Die zylinderförmige Arbeitskammer (4) ist mit einem Behälter (11) über einen Stutzen (8) zum Herausführen des flüssigen Metalls und über einen Verbindungsstutzen (7) verbunden. Dabei ist eine Öffnung im Körper der zylinderförmigen Arbeitskammer (4), über welche der Stutzen (8) zum Herausführen des flüssigen Metalls mit der zylinderförmige Arbeitskammer (4) in Verbindung steht, von der zentralen Längsachse dieser Kammer (4) in einem Abstand liegt, der größer als die Öffnung im Körper der zylinderförmigen Arbeitskammer (4) ist, über welche die zylinderförmige Arbeitskammer (4) mit dem Verbindungsstutzen (7) verbunden ist. Der Innenraum des Behälters (11) ist durch eine Trennwand in zwei untereinander kommunizierende Hohlräume aufgeteilt, und an einen der Hohlräume sind Austrittsenden des Stutzens (8) und des Verbindungsstutzens (7) angeschlossen. Zwischen dem Stutzen (8) und dem flüssigen Metall im Behälter (2) ist eine Gleichstromquelle (17) geschaltet.

FIG.1

# VORRICHTUNG ZUR DOSIERTEN ZUFÜHRUNG UND ZUR ERWÄRMUNG DES FLÜSSIGEN METALLS

## Gebiet der Technik

Die vorliegende Erfindung bezieht sich auf das Hütten- und Gießereiwesen und betrifft insbesondere eine Vorrichtung zur dosierten Zuführung und zur Erwärmung des flüssigen Metalls.

## Zugrundeliegender Stand der Technik

Es ist eine Vorrichtung zur automatischen Dosierung des aus einem Warmhalteofen zuzuführenden flüssigen Metalls bekannt, die eine Metallzuführungsleitung, eine Gasleitung und einen Regler der Flüssigmetallzuführung enthält, der in Form eines Gasleitungsrohres ausgebildet ist, dessen ein Ende im Warmhalteofen befestigt ist, während das andere Ende an einen Oberdruckwächter, z.B., einen hydraulischen Röhrenverschluß angeschlossen ist, wobei an das Rohr in seinem mittleren Bereich eine Gasquelle angeschlossen ist (SU, A, 582044).

Die Vorrichtung wird wie folgt betrieben

Im Ausgangszustand ist der Gasdrück im Warmhalteofen dem atmosphärischen Drück gleich und das flüssige Metall in der Metallzuführungsleitung liegt in der Höhe des freien Schmelzbadspiegels. Bei einer Erhöhung des Gasdruckes im Gasleitungsrohr barbotiert das Gas durch das flüssige Metall, indem es den Druck im Warmhalteofen erhöht; dabei steigt das flüssige Metall in der Metallzuführungsleitung bis zur vorgegebenen Höhe, die im weiteren automatisch konstant unabhängig vom Flüssigmetallspiegel im Warmhalteofen aufrechterhalten wird.

Eine solche Vorrichtung gewährleistet ein automatisches Aufrechterhalten des flüssigen Metalls im Austrittsteil der Metallzuführungsleitung unabhängig vom Flüssigmetallspiegel im Warmhalteofen, wodurch die Durchführung des Prozesses des Metallstranggießens ermöglicht wird.

Die bekannte Vorrichtung erfordert jedoch ein Abdichten des Warmhaltofens, die Ausbildung einer hermetisch abgeschlossen Herausführung der Metallzuführungsleitung und einer hermetisch abgeschlossenen Einführung des Gasleitungsrohres. Infolgedessen wird die Vorrichtung zu einer Vorrichtung intermittierender Arbeitsweise, weil nach der Entleerung der Warmhalteofen undicht gemacht, beschickt und dann wieder abgedichtet werden muß.

Es ist auch eine Vorrichtung zum Umpumpen des flüssigen Metalls bekannt, die eine zentrifugale MHD- Konduktoonspumpe enthält, welche in einem Behälter mit flüssigem Metall untergebracht ist (SU, A, 679783). Die MHD-Pumpe enthält ein Keramikgehäuse mit Doppelwänden, zwischen welchen eine Solenoidspule angeordnet ist. Der zylinderförmige Hohlraum des Gehäuses ist durch eine querverlaufende Trennwand in einen Oberraum und einen Unterraum eingeteilt. Im mittleren Bereich der Trennwand ist eine Öffnung vorgesehen, über welche der Oberraum des Gehäuses mit dem Unterraum desselben verbunden ist. Im Oberraum des Gehäuses befindet sich eine Graphitelektrode mit einem Elektrodenschuh, und die Arbeitskammer ist durch den Keramikschuh der Graphitelektrode und die Trennwand gebildet. Über den Unterraum des Gehäuses und die Öffnung der Trennwand wird das flüssige Metall aus dem Behälter in die Arbeitskammer zugeführt. Das flüssige Metalls wird über einen Stutzen zum Herausführen des flüssigen Metalls abgezogen, der in der Gehäusewand im Oberraum des Gehäuses angebracht ist.

Die Vorrichtung enthält auch zwei Gleichstromquellen, von denen die eine für den Durchfluß eines elektrischen Stromes durch das in der Arbeitskammer befindliche flüssige Metall sorgt, während die andere zum Durchlassen eines elektrischen Stromes durch die Solenoidspule dient.

Betrachten wir die Arbeitsweise der Vorrichtung.
Der Flüssigmetallspiegel wird im Behälter so eingestellt, daß bei den abgeschalteten Stromquellen die Arbeitskammer mit dem flüssigen Metall gefüllt ist. Der Graphitelektrode der MHD-Pumpe und der im Behälter mit flüssigem Metall befindlichen zusätzlichen Elektrode wird eine Spannung von der Gleichstromquelle zum Durchlassen eines elektrischen Stromes durch die Arbeitskammer zugeführt. Der Solenoidspule wird auch eine Spannung von der eigenen Gleichstromquelle zugeführt. Dabei wird in der Arbeitskammer ein Magnetfeld erzeugt, dessen Induktionsvektor an der Längsachse der Arbeitskammer entlang gerichtet ist. Der durch das in der Arbeitskammer befindliche flüssige Metall durchfließende Gleichstrom tritt in Wechselwirkung mit dem durch die Solenoidspule zu erzeugenden Magnetfeld und versetzt das flüssige Metall in Drehung. Dadurch wird ein Druckgefälle zwischen der zentralen Eintrittsöffnung und dem Stutzen zum Herausführen des flüssigen Metalls erzeugt, und das Metall wird in den Stutzen zum Herausführen des flüssigen Metalls zugeführt.

Das Vorhandensein von zwei Gleichstromquellen gestattet es, sowohl den Betreibstrom, der durch das in der Arbeitskammer befindliche flüssige Metall durchfließt, als auch den Strom, der durch die Solenoidspule durchfließt, zu steuern.

Bekanntlich ändern sich der von der zentrifugalen MHD-Konduktionspumpe erzeugte Druck, sowie die Leistung dieser Pumpe proportional der Änderung sowohl der Stärke des durch das flüssige Metall durchfließenden elektrischen Stromes, als auch der Stärke des durch die Solenoidspule durchfließenden elektrischen Stromes.

Deshalb kann die bekannte Vorrichtung zum Abpumpen des flüssigen Metalls zur dosierten Beschickung der Gießform mit dem flüssigen Metall verwendet werden, wobei die Steuerung der Dosierung eine Steuerung der durch das flüssige Metall in der Arbeitskammer und durch die Solenoidspule fließenden elektrischen Ströme darstellt.

Die bekannte Vorrichtung zum Abpumpen des flüssigen Metalls weist jedoch eine undichte Konstruktion auf und kann folglich nur einen geringen Druck erzeugen; die Leistung dieser Vorrichtung ändert sich stark sogar bei geringen Änderungen des Flüssigmetallspiegels im Behälter. Außerdem ermöglicht diese Vorrichtung keine Erwärmung des flüssigen Metalls in einem geschlossenen Raum während der Zuführung des flüssigen Metalls in eine Gießform.

Offenbarung der Erfindung

Der Erfindung liegt die Aufgabe zugrunde, eine Vorrichtung zur dosierten Zuführung und zur Erwärmung des flüssigen Metalls zu schaffen, bei der die gerätetechnische Ausführung der Arbeitskammer einer zentrifugalen MHD-Konduktionspumpe und die gerätetechnische Ausführung der Vorrichtung selbst eine kontinuierliche oder dosierte Einführung des flüssigen Metalls mit einer vorgegebenen Geschwindigkeit in die Gießform, eine Unabhängigkeit der Dosierungsgenauigkeit von zufälligen Schwankungen des Flüssigmetallspiegels im Behälter und eine Erwärmung des flüssigen Metalls in einem geschlossenen Raum auf die technologiebedingte Gießtemperatur gewährleisten.

Die gestellte Aufgabe wird dadurch gelöst, daß in Vorrichtung zur dosierten Zuführung und zur Erwärmung des flüssigen Metalls, enthaltend eine zentrifugale MHD--Konduktionspumpe, in deren Metallgehäuse koaxial zu diesem eine zylinderförmige Arbeitskammer, welche mit einem Behälter mit flüssigem Metall in Verbindung steht mit einem Stutzen zum Herausführen des flüssigen Metalls hermetisch verbunden ist und unter Einwirkung eines vom Magnetsystem zu erzeugenden Magnetfeldes steht, sowie mindestens eine Gleichstomquelle, welche zwischen dem flüssigen Metall und dem Stutzen zum Herausführen des flüssigen Metalls angeschlossen ist, angeordnet sind, erfindungsgemäß die zylinderförmige Arbeitskammer mit

- 5 -

einem Verbindungsstutzen zusätzlich versehen ist, und
die Öffnung im Körper der zylinderförmigen Arbeitskammer,
über welche der Stutzen zum Herausführen des flüssigen
Metalls mit der zylinderförmigen Arbeitskammer hermetisch
verbunden ist, von der zentralen Längsachse der zylinderförmigen Arbeitskammer in einem Abstand liegt, der grösser als die Öffnung im Körper der zylinderförmigen Arbeitskammer ist, über welche die zylinderförmige Arbeitskammer mit dem Verbindungsstützen hermetisch verbunden
ist, und im Boden der zylinderförmigen Arbeitskammer sowie im Boden des Metallsgehäuses Zentralbohrungen vorgesehen sind, die einen Kanal bilden, über welchen die zylinderförmige Arbeitskammer mit dem Behälter mit flüssigem Metall verbunden ist, und außerdem die Vorrichtung
mit einem Behälter zusätzlich versehen ist, dessen Innenraum durch eine Trennwand in zwei untereinander kommunizierende Hohlräume eingeteilt ist, und an einen der Hohlräume Austrittsenden des Stutzens zum Herausführen des
flüssigen Metalls und des Verbindungsstutzens angeschlossen sind.

Es ist zweckmäßig, im Hohlraum des Behälters, der mit
den Austrittsenden des Stutzens zum Herausführen des
flüssigen Metalls und des Verbindungsstutzens verbunden
ist, senkrecht zu der vorhandenen Trennwand eine weitere
Trennwand mit einer Höhe aufzustellen, die kleiner als
die Höhe der vorhandenen Trennwand ist.

Die Vorrichtung kann möglicherweise mit einer Wechselstomquelle versehen werden, welche an den Stutzen zum
Herausführen des flüssigen Metalls und an den Verbindungsstutzen etwa in der Mitte der Länge derselben angeschlossen ist.

Das Vorhandensein eines Verbindungsstutzens und eines
mit Trennwänden versehenen Behälters sowie der entsprechende Anschluß des Verbindungsstutzens und des Stutzens
zum Herausführen des flüssigen Metalls an die zylinderförmige Arbeitskammer und an den Behälter gewährleisten

- 6 -

eine kontinuierliche oder dosierte Zuführung des flüssigen Metalls mit einer vorgegebener Geschwindigkeit in die Gießform, eine Unabhängigkeit der Dosiergenauigkeit von den zufälligen Schwankungen des Spiegels des flüssigen Metalls im Behälter sowie die Erwärmung des flüssigen Metalls in einem geschlossenen Raum auf die technologiebedingte Gießtemperatur.

Durch den Anschluß einer zusätzlichen Gleichstromquelle an den Stutzen zum Herausführen des flüssigen Metalls und an den Verbindungsstutzen wird eine zusätzliche Erwärmung des flüssigen Metalls in einem geschlossenen Raum gewährleistet.

## Kurze Beschreibung der Zeichnungen

Nachstehend wird die Erfindung anhand der Ausführungsbeispiele mit Bezugsnahme auf die beigefügten Zeichnungen erläutert. Es zeigen:

Fig. 1 - eine erfindungsgemäße Vorrichtung zur dosierten Zuführung und zur Erwärmung des flüssigen Metalls;

Fig. 2 - einen Behälter, an welchen ein Stutzen zum Herausführen des flüssigen Metalls und ein Verbindungsstutzen angeschlossen sind;

Fig. 3 - einen Schnitt nach der Linie III - III in Fig. 2.

## Bevorzugte Ausführungsvariante der Erfindung

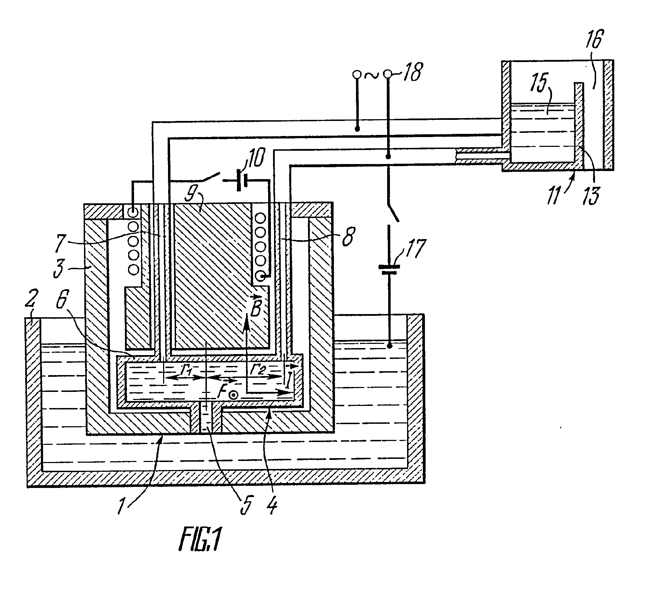

Die erfindungsgemäße Vorrichtung zur dosierten Zuführung und zur Erwärmung des flüssigen Metalls enthält eine zentrifugale MHD-Konduktionspumpe 1 (Fig. 1), die in einem Behälter 2 mit flüssigem Metall untergebracht ist. Die zentrifugale MHD-Konduktionspumpe 1 enthält ein Metallgehäuse 3, in dem koaxial zu diesem eine zylinderförmige Arbeitskammer 4 angeordnet ist. Im Boden der zylinderförmigen Arbeitskammer 4 und im Boden des Metallgehäuses 3 der MHD-Pumpe 1 sind Zentralbohrungen vorgesehen, die einen Kanal 5 bilden, über welchen der Innenraum der zylinderförmigen Arbeitskammer 4 mit dem Behälter 2 mit flüssigem Metall verbunden ist. Die zylinderförmige Arbeitskammer 4 ist aus Metall ausgeführt. Im Deckel 6 der zylinderförmigen Arbeitskammer 4 sind zwei Öffnungen vorgesehen, die in verschiedenen Abständen von der zentralen Längsachse der zylinderförmigen Arbeitskammer 4 liegen und entsprechend mit einem Verbindungsstutzen 7 und einem Stutzen 8 zum Herausführen des flüssigen Metalls hermetisch verbunden sind.

Der Verbindungsstutzen 7 ist in einem Abstand $r_1$ von der zentralen Längsachse der zylinderförmigen Arbeitskammer 4 und der Stutzen 8 zum Herausführen des flüssigen Metalls in einem Abstand $r_2$ von der zentralen Längsachse der zylinderförmigen Arbeitskammer 4 angeordnet, wobei $r_1 < r_2$.

Die zylinderförmige Arbeitskammer 4 wird von einem Magnetfeld beeinflußt, das von einem Magnetsystem 9 erzeugt wird, wobei der Vektor $\vec{B}$ der magnetischen Induktion des Magnetfeldes parallel zu der Längsachse der zylinderförmigen Arbeitskammer 4 verläuft. Das Magnetsystem 9 ist in Form einer Solenoidspule ausgebildet, die an eine Gleichstromquelle 10 angeschlossen ist. Das Magnetsystem kann möglicherweise in Form von Dauermagneten ausgebildet werden.

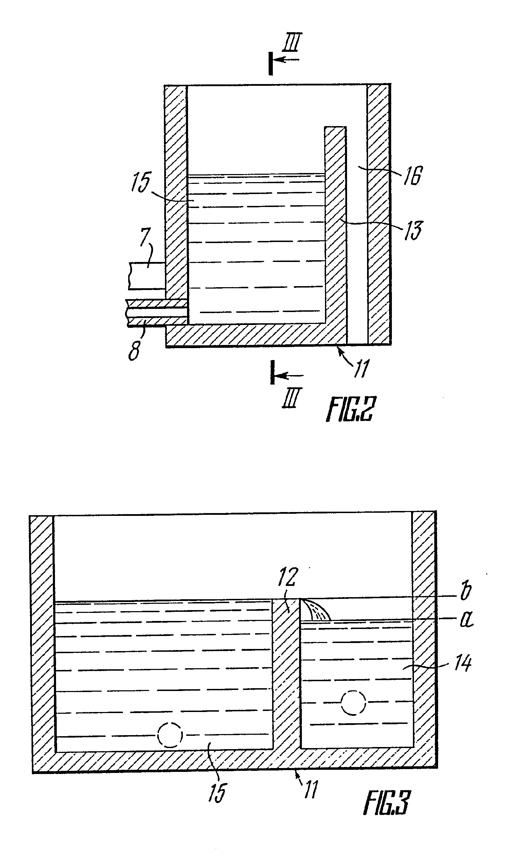

Die Vorrichtung ist außerdem zusätzlich mit einem Behälter 11 versehen, an welchen Austrittsenden des Verbindungsstutzens 7 und des Stutzens 8 zum Herausführen des flüssigen Metalls hermetisch angeschlossen sind. Der Behälter 11 (Fig. 2, 3) ist durch zwei Trennwände 12 und 13 in drei untereinander kommunizierende Hohlräume 14, 15, 16 eingeteilt, wobei die Hohlräume 14 und 15 entsprechend mit dem Verbindungsstutzen 7 und mit dem Stutzen 8 zum Herausführen des flüssigen Metalls in Verbindung stehen. Die Trennwand 12, welche die Hohlräume 14 und 15 einteilt, die entsprechend mit Stutzen 7, 8 in Verbindungs stehen, hat eine geringere Höhe als die

- 8 -

Höhe der Trennwand 13.

Der Stutzen 8 zum Herausführen des flüssigen Metalls und das im Behälter 2 (Fig. 1) befindliche flüssige Metall sind an eine Gleichstromquelle 17 angeschlossen. (Es ist dabei auch möglich, daß der Verbindungsstutzen 7 an die Gleichstromquelle 17 angeschlossen ist). Zu einer zusätzlichen Erwärmung des flüssigen Metalls kann die Vorrichtung außerdem mit einer Wechselstromquelle 18 versehen werden, die an den Verbindungsstutzen 7 und den Stutzen 8 zum Herausführen des flüssigen Metalls in der Mitte der Länge derselben angeschlossen ist.

Betrachten wir die Arbeitsweise der Vorrichtung zur dosierten Zuführung und zur Erwärmung des flüssigen Metalls.

Beim Einschalten der Gleichstromquelle 17 (Fig. 1) fließt der elektrische Strom $\vec{I}$ durch folgenden Weg: flüssiges Metall im Behälter 2 - flüssiges Metall im Kanal 5 - flüssiges in dem Innenraum der Arbeitskammer 4 - Stutzen 8 zum Herausführen des flüssigen Metalls. Beim Durchfließen des Stromes durch das flüssige Metall im Innenraum der Arbeitskammer 4 ist der Vektor des elektrischen Stromes $\vec{I}$ über den Radius der zylinderförmigen Arbeitskammer 4 genau senkrecht zu deren Längsachse gerichtet. Beim Einschalten der Gleichstromquelle 10 beginnt der elektrische Strom durch die Solenoidspule 9 des Magnetsystems zu fließen und in der Arbeitskammer 4 wird ein Magnetfeld erzeugt, dessen Induktionsvektor $\vec{B}$ parallel zur Längsachse der Arbeitskammer 4 gerichtet ist. Bei der Wechselwirkung des elektrischen Stroms $\vec{I}$ und des magnetischen Feldes mit dem Induktionsvektor $\vec{B}$ untereinander beginnt die Kraft $\vec{F}$, welche senkrecht zu der Ebene der Zeichnung in Fig. 1 gerichtet ist, auf das in der Kammer 4 befindliche flüssige Metall einzuwirken. Unter Einwirkung der Kraft $\vec{F}$ wird das in der Arbeitskammer 4 befindliche flüssige Metall in Drehung versetzt, und zwischen dem Kanal 5, über welchen der Innenraum der Arbeitskammer 4 mit dem Behälter 2 mit flüssigem Metall verbunden ist, und den Stutzen 7 und 8 wird ein Druckgefälle erzeugt, das dem Druckgefälle ähnlich ist, welches in einer herkömmlichen Zentrifugalpumpe entsteht.

Es ist bekannt, daß der Druck P (r) in der Arbeitskammer 4 der zentrifugalen MHD-Konduktionspumpe 1 als
Funktion r des Abstandes der Längsachse der Arbeitskammer 4 durch das Verhältnis

$$P(r) \sim r$$

ausgedrückt wird; bei einer Anordnung des Verbindungsstutzens 7 und des Stutzens 8 zum Herausführen des flüssigen Metalls in Abständen $r_1$ und $r_2$ entsprechend von
der zentralen Längsachse der Arbeitskammer 4 wird die
Druckdifferenz $\Delta P$ im Verbindungsstutzen 7 und im Stutzen 8 zum Herausführen des flüssigen Metalls durch folgendes Verhältnis ausgedrückt:

$$\Delta P \sim (r_2 - r_1).$$

In Abhängigkeit von den Größen des elektrischen Stromes I, der durch das flüssige Metall im Innenraum der
Arbeitskammer 4 durchfließt, und der magnetischen Induktion B wird die Vorrichtung in zwei Betriebszuständen
betrieben.

Beim Betrieb im ersten Zustand des Kreislaufes werden die Größen I und B so (Fig. 2, 3) gewählt, daß der
Flüssigmetallspiegel "a" im Hohlraum 14 unterhalb des
Flüssigmetallspiegels "b" im Hohlraum 15 eingestellt
wird, der von der Höhe der Trennwand 12 vorgegeben wird,
und die Druckdifferenz $\Delta P$ im Verbindungsstutzen 7 und
im Stutzen 8 zum Herausführen des flüssigen Metalls grösser als der Druck der Flüssigmetallsäule mit einer Höhe
von (b - a) ist. Im Ergebnis wird das flüssige Metall
aus dem Hohlraum der Arbeitskammer 4 (Fig. 1) über den
Stutzen 8 zum Herausführen des flüssigen Metalls in den
Hohlraum 15 zugeführt und es beginnt, über die Trennwand 12 (Fig. 3) in den Hohlraum 14 zu fließen, wonach
es über den Verbindungsstutzen 7 in die Arbeitskammer 4
(Fig. 1) zurückgeführt wird. Es soll darauf hingewiesen

werden, daß der Flüssigmetallkreislauf über den oben beschriebenen Kreis bei bestimmten Werten des durch das flüssige Metall in der Arbeitskammer 4 fließenden elektrischen Stromes I, und der magnetischen Induktion B, u.z. bei solchen Werten möglich ist, bei denen der Flüssigmetallspiegel im Hohlraum 15 oberhalb des Oberteils der Trennwand 12 liegt. Infolge eines kontinuierlichen Durchmischens des flüssigen Metalls in dem genannten Kreis des Flüssigmetallkreislaufes wird im flüssigem Metall eine gleichbleibende Temperatur aufrechterhalten, die die Temperatur des flüssigen Metalls im Behälter 2 mit flüssigem Metall übersteigt. Diese Übersteigung der Temperatur des flüssigen Metalls im Kreis des Flüssigmetallkreislaufes gegenüber der Flüssigmetalltemperatur im Behälter 2 wird durch die Joulesche Wärme gewährleistet, die sich im Stutzen 8 zum Herausführen des flüssigen Metalls und in der Arbeitskammer 4 beim Durchfließen des von der Gleichstromquelle 17 zuzuführenden Gleichstromes I durch diese entwickelt. Die Temperatur des flüssigen Metalls im Kreis des Flüssigmetallkreislaufes kann nötigenfalls durch den Anschluß der Wechselstromquelle 18 zusätzlich erhöht werden.

Der Flüssigmetallspiegel "b" im Hohlraum 15 hängt von den Schwankungen des Flüssigmetallspiegels im Behälter 2 nicht ab, solange ein Flüssigmetallkreislauf und ein Überfließen des flüssigen Metalls über die Trennwand 12 gewährleistet werden.

Beim Betrieb im zweiten Zustand des Vergießens werden die Werte I und B auf einen solchen Stand (Fig. 2) gebracht, bei dem der Flüssigmetallspiegel im Hohlraum 15 über die Trennwand 13 steigt und das flüssige Metall fängt an, frei in den Hohlraum 16 und aus diesen in eine Gießform oder eine Kokille (in Fig. nicht wiedergegeben) zu fließen. Je nach der Vergrößerung der Werte I und B kann dabei das flüssige Metall im Verbindungsstutzen 7 in Richtung der Arbeitskammer 4 hin (falls der Druck im Verbindungsstutzen 7 geringer als der statische Druck der Flüssigmetallsäule 13 auf der Höhe des Oberteils der Trennwand 13 ist) fließen oder überhaupt unbewegt bleiben (wenn der Druck im Verbindungsstutzen 7 dem statischen Druck der Flüssigmetallsäule auf der Höhe des Oberteils der Trennwand 13 gleich ist), oder es fängt an, in Richtung von der Arbeitskammer 4 zum Behälter 11 hin zu fließen (wenn der Druck im Verbindungsstutzen 7 den statischen Druck der Flüssigmetallsäule auf der Höhe des Oberteils der Trennwand 13 übersteigt).

Auf diese Weise gewährleistet die Vorrichtung zur dosierten Zuführung und zur Erwärmung des flüssigen Metalls eine kontinuierliche oder dosierte Zuführung des flüssigen Metalls mit einer vorgegebenen Geschwindigkeit in eine Gießform, das Aufrechterhalten des Flüssigmetallspiegels in einem Zusatzbehälter, unabhängig von den zufälligen Schwankungen des Flüssigmetallspiegels im Behälter sowie nötigenfalls die Erwärmung des flüssigen Metalls in einem geschlossenen Raum auf die technologiebedingte Gießtemperatur.

Industrielle Anwendbarkeit·

Die Erfindung kann im Hüttenwesen zur dosierten Zuführung von Legierungen, z.B. einer Schmelze für Masseln sowie zum Aufrechterhalten eines konstanten, von Schwankungen des Flüssigmetallspiegels im Behälter unabhängigen, Flüssigmetallspiegels in einem zusätzlichen Behälter ihre Anwendung finden, was bei der Durchführung des Verfahrens zum Metallstranggießen verwendet werden kann.

Im Gießereiwesen kann die Erfindung zur dosierten Beschickung von Gießformen mit dem flüssigen Metall ihre Anwendung finden, wobei nötigenfalls die Erwärmung des flüssigen Metalls in einem geschlossenen Raum auf die technologiebedingte Gießtemperatur vorgenommen werden kann.

In der Akkumulatorenindustrie kann die Erfindung zum Gießen der Stromableitungen und der anderen Teilen von Bleiakkumulatoren aus Legierungen auf der Bleibasis verwendet werden.

- 12 -

PATENTANSPRÜCHE

1. Vorrichtung zur dosierten Zuführung und zur Erwärmung des flüssigen Metalls, enthaltend eine zentrifugale MHD-Konduktionspumpe (1) in deren Metallgehäuse (3) koaxial zu diesem eine zylinderförmige Arbeitskammer (4), welche mit einem Behälter (2) mit flüssigem Metall in Verbindung steht, mit einem Stutzen (8) zum Herausführen des flüssigen Metalls hermetisch verbunden ist und unter Einwirkung eines vom Magnetsystem zu erzeugenden Magnetfeldes steht, sowie mindestens eine Gleichstromquelle (17), welche zwischen dem flüssigem Metall und dem Stutzen (8) zum Herausführen des flüssigen Metalls angeschlossen ist, angeordnet sind, dadurch gekennzeichnet, daß die zylinderförmige Arbeitskammer (4) mit einem Verbindungsstutzen (7) zusätzlich versehen ist, und die Öffnung im Körper der zylinderförmigen Arbeitskammer (4), über welche der Stutzen (8) zum Herausführen des flüssigen Metalls mit der zylinderförmigen Arbeitskammer (4) verbunden ist, von der zentralen Längsachse der zylinderförmigen Arbeitskammer (4) in einem Abstand liegt, der grösser als die Öffnung im Körper der zylinderförmigen Arbeitskammer (4) ist, über welche die zylinderförmige Arbeitskammer (4) mit dem Verbindungsstutzen (7) hermetisch verbunden ist, und im Boden der zylinderförmigen Arbeitskammer (4) sowie im Boden des Metallgehäuses (3) Zentralbohrungen vorgesehen sind, die einen Kanal (5) bilden, über welchen die zylinderförmige Arbeitskammer (4) mit dem Behälter (2) mit flüssigem Metall verbunden ist, und außerdem die Vorrichtung mit einem Behälter (11) zusätzlich versehen ist, dessen Innenraum durch eine Trennwand 13 in zwei untereinander kommunizierende Hohlräume eingeteilt ist, und an einen der Hohlräume Austrittsenden des Stutzens (8) zum Herausführen des flüssigen Metalls und des Verbindungsstutzens (7) angeschlossen sind.

- 13 -

2. Vorrichtung zur dosierten Zuführung und zur Erwärmung des flüssigen Metalls nach Anspruch 1, dadurch gekennzeichnet, daß im Hohlraum (11), der mit Austrittsenden des Stutzens (8) zum Herausführen des flüssigen Metalls und des Verbindungsstutzens (7) verbunden ist, senkrecht zu der vorhandenen Trennwand (13) eine weitere Trennwand (12) mit einer Höhe aufgestellt ist, die kleiner als die Höhe der vorhandenen Trennwand (13) ist.

3. Vorrichtung zur dosierten Zuführung und zur Erwärmung des flüssigen Metalls nach Anspruch 1, dadurch gekennzeichnet, daß sie mit einer Wechselstromquelle (18) versehen ist, welche an den Stutzen (8) zum Herausführen des flüssigen Metalls und an den Verbindungsstutzen (7) etwa in der Mitte der Länge derselben angeschlossen ist.

FIG.1

EP 0 394 447 A1

FIG.2

FIG.3

# INTERNATIONAL SEARCH REPORT

International Application No PCT/SU 88/00217

## I. CLASSIFICATION OF SUBJECT MATTER (if several classification symbols apply, indicate all)

According to International Patent Classification (IPC) or to both National Classification and IPC

IPC$^4$: H 02 K 44/04, B 22 D 39/00

## II. FIELDS SEARCHED

### Minimum Documentation Searched

| Classification System | Classification Symbols |
|---|---|
| IPC$^4$: | H 02 K 44/04, B 22 D 39/00, C 22 C 1/02 |

Documentation Searched other than Minimum Documentation
to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| A | SU, A1, 679783, (D.G. Bykhovsky et al.), 18 August 1979, see the claims, figures 1,2 | 1-3 |
| A | GB, B, 1377628 (THOMAS BLACKLEDGE STAMP), 18 December 1974, see the claims, figure 1 | 1-3 |
| A | GB, B, 1391785, (BRIAN ROBERT LEWIS), 23 April 1975, see the claims figures 2,4 | 1-3 |
| A | US, A, 4230241, (GENERAL BATTERY CORPORATION), 28 October 1980, see the claims, figures 2,5 | 1-3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 13 June 1989 (13.06.89) | 24 July 1989 (24.07.89) |
| International Searching Authority | Signature of Authorized Officer |
| ISA/SU | |

Form PCT/ISA/210 (second sheet) (January 1985)